# EUROPEAN PATENT SPECIFICATION

(11) **EP 0 598 321 B1**
(45) Date of publication and mention of the grant of the patent: **31.05.2006**
(21) Application number: 93118220.8
(22) Date of filing: 10.11.1993
(51) Int. Cl.: C01B 13/02, B01D 53/04

(54) **Adsorption Process with mixed repressurization and purge/equalization**
Adsorptionsverfahren mit gemischten Druckaufbau und Spülung/Druckausgleich
Procédé d'adsorption avec répressurisation mixte et purge/égalisation de pression

(30) Priority: 16.11.1992 US 976878; 25.03.1993 US 37070
(43) Date of publication of application: 25.05.1994
(73) Proprietor: AIR PRODUCTS AND CHEMICALS, INC., Allentown, PA 18195-1501 (US)
(72) Inventor: Kumar, Ravi, Allentown, PA 18103 (US); Naheiri, Tarik, Bath, PA 18014 (US); Watson, Charles Franklin, Orefield, PA 18069 (US)
(74) Representative: Marx, Lothar

(56) References cited:
- EP-A- 0 194 334
- EP-A- 0 398 339
- GB-A- 2 155 805
- US-A- 4 077 780
- US-A- 4 650 501
- US-A- 5 174 796

## Description

The present invention is directed to a vacuum swing adsorption process for the separation of a more strongly adsorbable component from a less strongly adsorbable component in a gas mixture with high recovery of the less strongly adsorbable component at approximately feed pressure. More specifically, the present invention is a vacuum swing adsorption process for the separation of air to recover oxygen as a relatively unadsorbed product at high recovery and approximately feed pressure using cocurrent depressurization to provide purge gas followed by pressure equalization and mixed repressurization.

Oxygen is a commodity chemical in the industrial gas industry.It has numerous applications including waste water treatment, glass melting furnaces, and the steel industry. One of the most common methods of oxygen production is by cryogenic distillation of air. However, this technology is not competitive for small size oxygen plants (<100 TPD O₂). The technology of choice for this size range is adsorption. There is a need in the marketplace to produce oxygen at low capital and energy costs by adsorptive gas separation.

Adsorptive processes are extensively used in the industry to produce oxygen from air for small size oxygen plants (<100 TPD O₂). There are two major categories of these processes - pressure swing adsorption processes (PSA) and vacuum swing adsorption processes (VSA). The pressure swing adsorption processes carry out the adsorption (feed) step at pressures much higher than ambient and adsorbent regeneration at pressures close to ambient. The adsorbent beds go through secondary process steps, such as pressure equalizations, depressurizations, blowdowns, and purge or various combinations of these during the cycle. Some of the O₂-PSA processes are described in U.S. Patents 3,430,418; 3,636,679; 3,717,974; 3,738,087; 4,326,858; 4,329,158; 4,589,888; 4,650,501; 4,948,391; 4,969,935; 4,981,499; and U.K. Patent GB 2,227,685A.

These processes tend to be energy intensive and more suitable for smaller oxygen plants producing less than 40 tons of oxygen per day and preferably less than 20 tons of oxygen per day. A subset of O₂ PSA processes is a rapid pressure swing adsorption (RPSA) process. As the name implies, this process involves similar steps as a PSA process, but carries out these steps very quickly. Some examples of this process are U.S. Patents 4,194,892 and 4,406,675. Again, this process tends to be energy intensive and suitable for oxygen plants even smaller than O₂ PSA's.

Primary reasons for high energy consumption in PSA processes are: (1) O₂ recovery from these processes is low, and (2) the entire feed stream has to be compressed up to the adsorption pressure. These inefficiencies are somewhat circumvented in vacuum swing adsorption (VSA) processes. In these processes, adsorption is carried out at pressure close to ambient and adsorbent regeneration is carried out at sub-atmospheric levels. The adsorbent beds go through several secondary steps with the primary aim of increasing oxygen recovery and reducing adsorbent inventory per unit of product gas.

U.S. Patent 3,957,463 describes an O₂ VSA process comprised of the steps of: adsorption, evacuation and product repressurization. The process consists of two trains of two adsorbent beds in each train. The beds on the feed end of each train remove water and carbon dioxide from air, and the beds on the product end of each train remove nitrogen from air. Oxygen produced from the process is stored for later use as product and repressurization gas in a tank.

GB Patent 1,559,325 describes several two and three bed O₂ VSA processes. The two bed O₂ VSA processes have the steps: adsorption, evacuation, and product repressurization with the addition of purging the bed during evacuation and repressurizing it after evacuation with gas being continuously produced by the bed on adsorption step. The three bed options have similar steps with the addition that all the effluent gas from a bed toward the end of its adsorption step is fed to the bed which has finished product repressurization and is ready to go on to the air feed step. Effluent from the second bed is also withdrawn as oxygen product. A vacuum pump operates continuously in the three bed options, and the product take off is also continuous. GB Patent 1,594,454 describes the control strategy for O₂ VSA process disclosed in GB Patent 1,559,325.

Japanese patent application 59-255060 (255,060/84) describes a four bed O₂ VSA process with the process steps: adsorption, cocurrent depressurization, evacuation, vacuum purge, pressure equalization, and product repressurization. In this process, the gas obtained during the cocurrent depressurization step is used for the pressure equalization steps and then, vacuuin purge.

U.K. Patent application GB 2,154,895A describes three bed O₂ VSA processes with process steps: adsorption, cocurrent depressurization, evacuation, vacuum purge, pressure equalization(s), and simultaneous feed repressurization with product end to product end pressure equalization. The cocurrent depressurized gas is used for pressure equalization(s) and vacuum purge.

Japanese patent application 1984-[Showa 59]-35,141 describes a three bed 0₂ VSA process with these steps: adsorption, evacuation with continuous purge, and repressurization. In this process, vacuum purge and repressurization are carried out by product oxygen.

U.K. Patent GB 2,109,266B describes three and four bed 0₂ VSA processes comprised of steps: adsorption, provide purge gas, evacuation, vacuum purge, and product repressurization steps. The purge gas used for vacuum purge step is provided either by cocurrent depressurization of the bed, which has finished its adsorption step, or by continuing the feed to the bed on its adsorption step but directing all the effluent from this bed to the bed on a vacuum purge step.

U.S. Patent 3,986,849 describes a hydrogen PSA process using two to three pressure equalization steps prior to depressurization to provide purge in a process having multiple beds on overlapping adsorption steps.

U.S. Patent 4,614,525 suggests an improvement to 0₂ VSA processes by heating the feed mixture by heat exchange with the vacuum pump.

U.S. Patent 4,684,377 outlines a three bed O₂ VSA process with steps: adsorption, simultaneous cocurrent depressurization and evacuation, evacuation, product end to product end pressure equalization by gas from the product end of the bed on simultaneous cocurrent depressurization, and evacuation step and product repressurization.

U.S. Patent 4,756,723 describes an adsorptive process for oxygen production where adsorption is carried out at superambient pressure. This is followed by countercurrent depressurization, evacuation and product repressurization to adsorption pressure. Part of the gas discharged during the countercurrent depressurization step may also be used for pressure equalization with a bed before the product repressurization step.

U.S. Patent 4,917,710 describes a two bed O₂ VSA process with a product storage vessel. Process cycle steps are: adsorption, cocurrent depressurization, simultaneous cocurrent depressurization and evacuation, evacuation, vacuum purge by product, vacuum purge by gas obtained in a cocurrent depressurization step, simultaneous pressure equalization and product repressurization, and simultaneous feed and product repressurization. Gas for product repressurization and product purge is obtained from the product storage vessel. Gas for pressure equalization is obtained from the bed on simultaneous cocurrent depressurization and evacuation step.

U.S. Patent 4,781,735 and European patent application 0 273 723 describe a three bed 0₂ VSA process with steps: adsorption, feed to feed or dual end pressure equalization, cocurrent depressurization, evacuation, vacuum purge by gas obtained in cocurrent depressurization step, product repressurization from bed on feed step, simultaneous feed repressurization and feed to feed or dual end pressure equalization.

European patent application 0 354 259 outlines various options for a two bed O₂ VSA process: adsorption, cocurrent depressurization, evacuation, pressure equalization with gas obtained in cocurrent depressurization step and feed repressurization. Some options include vacuum purge by product gas from the bed on adsorption step.

U.S. Patent 4,969,935 describes a three bed O₂ VSA process with steps: adsorption, simultaneous cocurrent depressurization and countercurrent evacuation, countercurrent evacuation, vacuum purge by product, product end to product end pressure equalization followed by product end to feed end pressure equalization using cocurrently depressurized gas and product repressurization.

U.S. Patent 5,015,271 describes an 0₂ VSA process with the steps: adsorption, simultaneous cocurrent depressurization and countercurrent evacuation or feed, countercurrent evacuation, simultaneous product to product pressure equalization and feed repressurization, or vacuum purge, simultaneous feed and product repressurization and feed repressurization.

French Patent W091/12874; PCT/FR91/00164 describes a two bed 0₂ VSA process with basic process steps of adsorption, depressurization, evacuation, vacuum purge by product, pressure equalization and repressurization. Three variations are outlined.

European Patent 0 449 448 A1 outlines a two bed process with steps: adsorption, simultaneous evacuation and cocurrent depressurization, evacuation, product purge under vacuum, pressure equalization and product repressurization.

US-A 4,650,501 teaches a process of pressure swing adsorbtion. Such processes are not able to use ambient feed gas or air for at least part of its repressurization. A simultaneous adsorbtion and repressurization step is used in product is recovered while feed gas is pressurizing the adsorbtion bed. This combination of the repressurization and adsorbtion wherein product oxygen is recovered and therefore product oxygen could not be used as a repressurization media together with the inability of using ambient feed gas or air for the repressurization leads to a relatively low recovery of product oxygen.

European patent application No. 0 308 339 discloses an adsorbtive process for producing two gas streams from a gas mixture. Adsorbtion, depressurization, low pressure purge, evacuation and repressurization are used. The process does not provide an optimum product recovery since a first depressurization gas is used for pressure equalization and only a subsequent depressurization gas is used for purge of another of the plurality of adsorbtion beds.

GB 2 155 805 A describes a pressure swing adsorbtion process for separating a product gas comprising less and more readily adsorbable consitutants which employs four adsorbtion columns. Purge is performed with product quality gas from a bed on continuous adsorbtion feed, as well as conducting a second purge with depressurization gas after an initial pressure equalization.

It is the object of the present invention to provide a vacuum swing adsorbtion process for the separation of a more strongly adsorbable component from a less strongly adsorbable component in a gas mixture with an enhanced recovery of product.

The above object is attained by a process according to claim 1. Advantageous embodiments of the invention are defined by the subclaims.

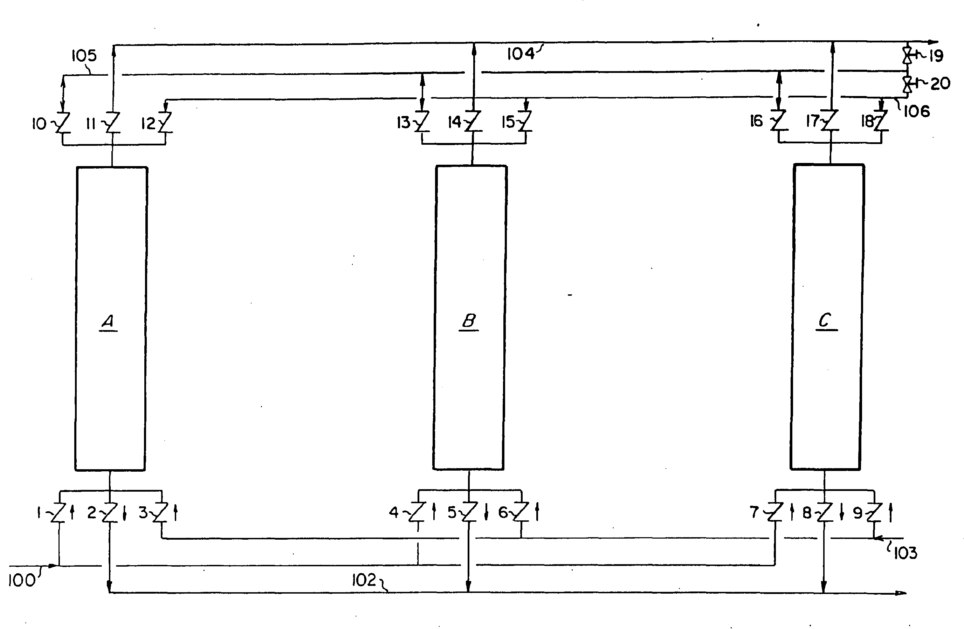

The drawing is a schematic drawing of a preferred embodiment of the present invention using three parallel adsorption beds and appropriate valve manifolding for feed, evacuation, purge, equalization and repressurization.

The present invention will now be described with regard to several preferred embodiments with the initial embodiment excluding pressure equalization and the second embodiment including pressure equalization.

The first embodiment has the following steps:
1. Adsorption (A),
2. Cocurrent depressurization (DP),
3. Countercurrent evacuation (DES),
4. Countercurrent purge (PU),
5. Sequential product (PRP) and feed repressurization, or sequential feed and product repressurization, or simultaneous product and feed repressurization. Feed repressurization can be further divided into two parts, the first being carried out by ambient air (AARP) and the second by high pressure feed (Feed RP) (1.03-2.07 bar (15-30 psia)).

A process cycle chart for this option with simultaneous repressurization is outlined in Table 1.

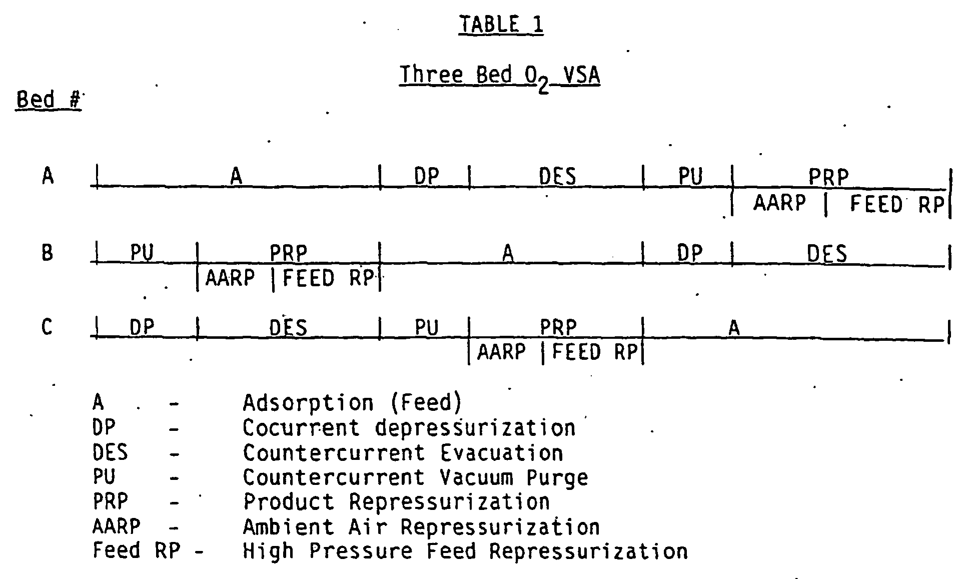

Process steps for the first embodiment will now be described in detail:
1. Adsorption (A), which consists of:
   a. Flowing the feed gas stream, consisting of atmospheric air at a pressure of 1.0 bar-2.07 bar (14.5-30 psia) and a temperature of -17.8-65.6°C (0-150°F) through a bed packed with one or more adsorbents capable of selectively adsorbing water, carbon dioxide, and nitrogen from air.
   b. Withdrawing an effluent stream consisting of O₂ product at feed pressure. Part of this stream is immediately used as repressurization gas for bed on step 5 and the remainder constitutes oxygen product.
   c. Continuing steps 1(a) and 1(b) for a predetermined cycle time or until the concentration of nitrogen impurity in the effluent stream reaches a preset limit. The bed is now called "spent" because it has exhausted its capacity for removing nitrogen from feed gas.
2. Cocurrent Depressurization Step (DP), which consists of:
   a. Discontinuing the feed flow through the spent bed and transferring the feed to another VSA bed.
   b. Reducing the pressure in the spent VSA bed from the adsorption pressure level to some "intermediate" level 10.53-1.45 bar (7.7- 21 psia)) by connecting the product end of this bed with the product end of the VSA bed on step 4 of its cycle.
   c. Discontinuing the above step when the pressure in the spent VSA bed has reached the predetermined intermediate pressure level. Preferably, the intermediate pressure is close to, but not lower than, the average of feed and lowest evacuation pressure reached in the VSA bed at the end of step 3 of its cycle.
3. Countercurrent Evacuation Step (DES), which consists of:
   a. Further reducing the pressure in the spent bed from intermediate level to the "lowest" level (0.07-0.7 bar (1.0-10 psia)) by connecting the feed or the feed and the product ends of the spent VSA bed with a vacuum pump.
   b. Continuing the above step until the pressure in the VSA bed has reached the predetermined lowest pressure level.
4. Countercurrent Purge Step (PU), which consists of:
   a. Continue evacuation of the VSA bed from the feed end.
   b. Connect the product end of this.bed with another VSA bed on step 2 of its cycle.
   c. Continuing the above steps until pressure in this.bed has reached to a "low" level (0.08-1.38 bar(1.2-20 psia)) and pressure in the VSA bed on step 2 has reached the intermediate pressure level.
5. Repressurization Step, which consists of:
   a. Discontinuing evacuation of the above bed and start evacuating another VSA bed. This bed'is now called "regenerated" since its capacity for N₂, H₂O, and CO₂ removal from air has been restored.
      A. Simultaneous Product and Ambient Air and/or Feed Repressurization Step (PRP/AARP and/or FRP), which consists of:
         b. Connecting the product end of the regenerated bed with the product end of the bed on step 1 of its cycle and opening the feed end of the regenerated bed to ambient air or connecting the feed end of the regenerated bed to feed blower.
            or
            Connecting the product end of the regenerated bed with the product end of the bed on step 1 of its cycle and opening the feed end of the regenerated bed to ambient air.
            b₁ Continuing the above step until pressure i.n the regenerated bed is close to or equal to ambient pressure.
            b₂ Disconnecting the feed end of the regenerated bed from ambient air and connecting it to feed blower.
         c. Continuing the above step until pressure in the regenerated bed is equal to the predetermined adsorption pressure.
            OR
      B. Sequential Product and Ambient Air and/or Feed Repressurization Step (PRP/AARP and/or FRP), which consists of:
         b. Connecting the product end of the.regenerated bed with the product end of the bed on step 1 of its cycle.
         c. Continuing the above step until pressure in the regenerated bed has reached the predetermined pressure level, which is lower than the adsorption pressure.
         d. Discontinuing the product repressurization and opening the feed end of the regenerated bed to ambient air or connecting it to the feed blower.
            or
            Discontinuing the product repressurization and opening the feed end of the regenerated bed to ambient air.
            d₁ Continuing the above step until pressure in the regenerated bed is close to or equal to ambient pressure.
            d₂ Disconnecting the feed end of the regenerated bed from ambient air and connecting it to the feed blower.
         e. Continuing the above step until the pressure in the regenerated bed is equal to the predetermined adsorption pressure.
            OR
      C. Sequential Ambient air and/or Feed and Product Repressurization, which consists of:
         b. Connecting the feed end of the regenerated bed to ambient air or connecting it to the feed blower.
            or
            Opening the feed end of the regenerated bed to ambient air
            b₁ Continuing the above step until pressure in the regenerated bed is close to or equal to ambient pressure.
            b₂ Disconnecting the feed end of the regenerated bed from ambient air and connecting it to the feed blower.
         c. Continuing the above ambient air and/or feed repressurization step until pressure in the regenerated bed has reached the predetermined pressure level, which is lower than the adsorption pressure.
         d. Discontinuing the ambient air and/or feed repressurization step and connecting the product end of the regenerated bed with the product end of the bed on step 1 of its cycle.
         e. Continuing the above step until the pressure in the regenerated bed is equal to the predetermined adsorption pressure.
This bed is now ready to undergo a new cycle starting from step 1(a).

The second embodiment has the following steps:
1. Adsorption (A),
2. Cocurrent depressurization to provide purge gas (DP1),
3. Cocurrent depressurization to provide pressure equalization gas (DP2) and optionally simultaneous initiation of countercurrent evacuation,
4. Countercurrent evacuation (DES),
5. Countercurrent purge (PU),
6. Pressure equalization (PE).
7. Product repressurization (PRP), or sequential product (PRP) and feed repressurization, or sequential feed and product repressurization, or simultaneous product and feed repressurization. Feed repressurization can be further divided into two parts, the first being carried out by ambient air (AARP) and the second by high pressure feed (Feed RP).

A process cycle chart for this option with product repressurization is outlined in Table 2. TABLE 2 Three Bed O₂ VSA

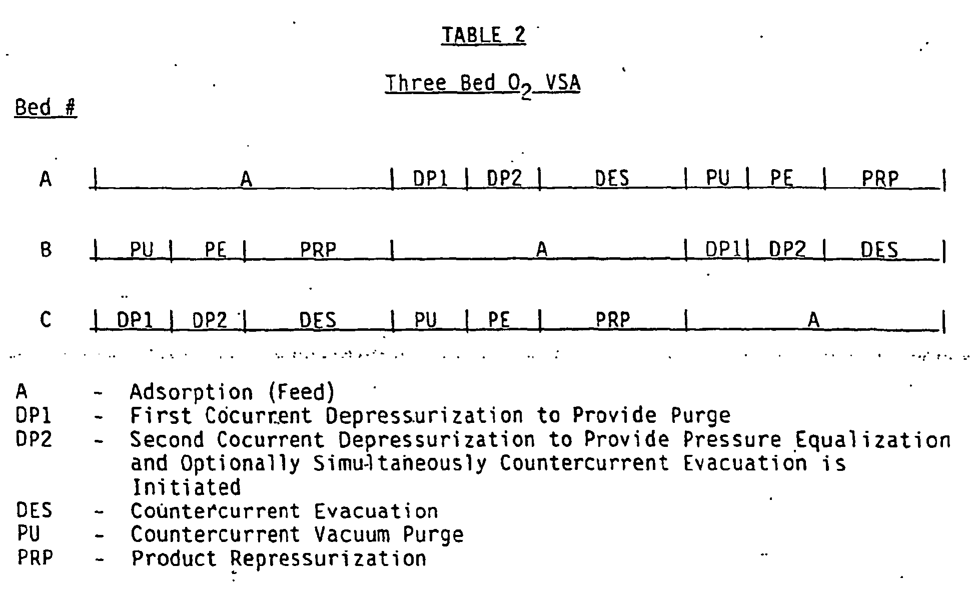

Process steps for the second embodiment will now be described in detail:
1. Adsorption Step (A), which consists of:
   a. Flowing the feed gas stream, consisting of atmospheric air at a pressure of 0.97-2.07 bar (14-30 psia) and temperature of -17.8-65.6°C (0-150°F) through a bed packed with one or more adsorbents capable of selectively adsorbing water, carbon dioxide, and nitrogen from air.
   b. Withdrawing an effluent stream consisting of O₂ product at feed pressure. Part of this stream is immediately used as repressurization gas for bed on step 7 and the remainder constitutes oxygen product.
   c. Continuing steps 1(a) and 1(b) for a predetermined cycle time or until the concentration of nitrogen impurity in the effluent stream reaches a preset limit. The bed is now called "spent" because it has exhausted its capacity for removing nitrogen from feed gas.
2. Cocurrent Depressurization Step (DP1), which consists of:
   a. Discontinuing the feed flow through the spent bed and transferring the feed to another VSA bed.
   b. Reducing the pressure in the spent VSA bed from the adsorption pressure level to some "intermediate" level (0.79-1.72 bar (11.5-25 psia)) by ' connecting the product end of this bed with the product end of the VSA bed on step 5 of its cycle.
   c. Discontinuing the above step when the pressure in the spent VSA bed has reached the predetermined intermediate pressure level..
3. Cocurrent Depressurization Step (DP2), which consists of
   a. Further reducing the pressure in the spent VSA bed from "intermediate level" to some "lower level" (0.53-1.45 bar (7.7-21.3 psia)) by connecting the product end of this bed with the product end of the VSA bed on step 6 of its cycle.
   b. Discontinuing the above step when the pressure in the spent VSA. bed has reached the predetermined "lower level". Preferably this pressure is the average of bed pressures at the end of steps 2 and 5.
   c. Optionally, simultaneous to a. above, initiating countercurrent evacuation of the spent VSA bed.
4. Countercurrent Evacuation Step (DES), which consists of:
   a. Further reducing the pressure in the spent bed from lower level to the "lowest" level (0.07-0.7 bar (1.0-10.0 psia)) by connecting the feed or the feed and the product ends of the spent VSA bed with a vacuum pump.
   b. Continuing the above step until the pressure in the VSA bed has reached the predetermined lowest pressure level.
5. Countercurrent Purge Step (PU), which consists of:
   a. Continuing evacuation of the VSA bed from the feed end.
   b. Connecting the product end of this bed with another VSA bed on step 2 of its cycle.
   c. Continuing the above steps until pressure in this bed has reached a "low" level (0.08-1.38 bar (1.2-20 psia)) and pressure in the VSA bed on step 2 has reached to the intermediate pressure level.
6. Pressure Equalization Step (PE), which consists of:
   a. Discontinuing evacuation of the above bed and start evacuating another VSA bed. This bed is now called "regenerated" since its capacity for N₂, H₂O, and CO₂ removal from air has been restored.
   b. Connecting the product end of the regenerated bed with the product end of the bed on step 3 of its cycle.
   c. Continuing the above step for a predetermined time or until pressure in bed has reached the predetermined lower level.
7. Repressurization Step, which consists of:
   a. Discontinuing the pressure equalization of regenerated bed.
      A. Product Repressurization (PRP), which consists of:
         b. Connecting the product end of the pressure equalized regenerated bed with the product end of the bed on step 1 of its cycle.
         c. Continuing the above step until pressure in the regenerated bed is close to or equal to the predetermined adsorption pressure.
            OR
      B. Simultaneous Product and Ambient Air and/or Feed Repressurization Step (PRP/AARP, and/or FRP), which consists of:
         b. Connecting the product end of the regenerated bed with the product end of the bed on step 1 of its cycle and opening the feed end of the regenerated bed to ambient air or connecting the feed end of the regenerated bed to feed blower.
            or
            Connecting the product end of the regenerated bed with the product end of the bed on step 1 of its cycle and opening the feed end of the regenerated bed to ambient air.
            b₁ Continuing the above step until pressure in the regenerated bed is close to or equal to ambient pressure.
            b₂ Disconnecting the feed end of the regenerated bed from ambient air and connecting it to feed blower.
         c. Continuing the above step until pressure in the regenerated bed is equal to the predetermined adsorption pressure.
            OR
      C. Sequential Product and Ambient Air and/or Feed Repressurization Step (PRP/AARP and/or FRP), which consists of:
         b. Connecting the product end of the regenerated bed with the product end of the bed on step 1 of its cycle.
         c. Continuing the above step until 1 pressure in the pressure equalized regenerated bed has reached the predetermined pressure level, which is lower than the adsorption pressure.
         d. Discontinuing the product repressurization and opening the feed end of the regenerated bed to ambient air or connecting it to the feed blower.
            or
            Discontinuing the product repressurization and opening the feed end of the regenerated bed to ambient air.
            d₁ Continuing the above step until pressure in the regenerated pressure equalized bed is close to or equal to ambient pressure.
            d₂ Disconnecting the feed end of the regenerated bed from ambient air and connecting it to the feed blower.
            e. Continuing the above step until the pressure in the regenerated bed is equal to the predetermined adsorption pressure.
               OR
      D. Sequential Ambient Air and/or Feed and Product Repressurization, which consists of:
         b. Connecting the feed end of the regenerated pressure equalized bed to ambient air or connecting it to the feed blower.
            or Opening the feed end of the regenerated bed to ambient air.
            b₁ Continuing the above step until pressure in the regenerated bed is close to or equal to ambient pressure.
            b₂ Disconnecting the feed end of the regenerated bed from ambient air and connecting it'to the feed blower.
         c. Continuing the above ambient air and/or feed repressurization step until pressure in the regeneration bed has reached the predetermined pressure level, which is lower than the adsorption pressure.
         d. Discontinuing the ambient air and/or feed repressurization step and connecting the product end of the regenerated bed with the product end of the bed on step 1 of its cycle.
         e. Continuing the above step until the pressure in the regenerated bed is equal to the predetermined adsorption pressure.
The bed is now ready to undergo a new cycle starting from step 1(a).

Flow schematic and hardware will be somewhat different for each of the process options of the present invention. The drawing depicts a schematic for the first preferred embodiment with simultaneous repressurization. Table 3 outlines the corresponding valve sequence for a typical cycle time. Detailed process description of the cycle at typical operating conditions for the process option described in the drawing and Tables 1 and 3 is given below:
Ambient air compressed to feed pressure (1.45 bar (21 psia)) by a feed blower enters through manifold 100 into first Bed A, which has been already pressurized to adsorption pressure via open valve 1. The Bed is packed with adsorbent(s) selective for the removal of water, carbon dioxide, and nitrogen from air. Oxygen products withdrawn via open valve 11 and manifold 104. Feed flow is switched to Bed B via open valve 4 after a predetermined time or as soon as nitrogen concentration in the effluent from Bed A reaches a preset limit or the adsorption front approaches the bed outlet. Pressure in Bed A is reduced by opening valve 10 and connecting Bed A with Bed C via manifold 105 and open valve 18. Bed C is being evacuated via open valve 8 and manifold 102. Valves 10, 18 and 8 are kept open for a predetermined time or until pressure in Bed A reaches 0.93 bar (13.5 psia). Valve 10 is now closed and Bed A is evacuated via open valve 2 and manifold 102. Valves 12 and 13 are opened at the end of the feed step in Bed B and reaching of evacuation level pressure (0.05 bar (4 psia) in Bed A. Valves 2, 12 and 13 are kept open for a predetermined time or until pressure in Bed A reaches 6 psia to vacuum purge Bed A through manifold 106. Valves 2 and 12 are then closed and valves 3 and 10 are opened for simultaneous ambient feed air and product repressurization through manifolds 103 and 105, respectively. Valve 3 is kept open until pressure in Bed A reaches -0.93 bar (13.5 psia). At this time, valve 3 is closed and valve 1 is opened. Bed A is now pressurized up to adsorption pressure -(1.45 bar (21 psia) with high pressure feed air in manifold 100. Valve 10 is then closed and valve 11 is opened to remove product oxygen through manifold 104. Bed A is now ready to start a new cycle. Each bed goes through a similar sequence of operation. Valve 19 is open during product repressurization. Valve 20 is open during purging .

**TABLE 3 Valve Sequence: 3 Bed O₂ VSA**

| Valve # --> | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| Time (sec) | | | | | | | | | | | | | | | | | | |
| 0-10 | o | | | | o | | | | | | o | | | | o | o | | |
| 10-20 | o | | | | | o | | o | | | o | | o | | | | | |
| 20-30 | o | | | o | | | | o | | | o | | o | | | | | |
| 30-40 | | | | o | | | | o | | o | | | | o | | | | o |
| 40-50 | | o | | o | | | | | o | | | | | o | | o | | |
| 50-60 | | o | | o | | | o | | | | | | | o | | o | | |
| 60-70 | | o | | | | | o | | | | | o | o | | | | o | |
| 70-80 | | | o | | o | | o | | | o | | | | | | | o | |
| 80-90 | o | | | | o | | o | | | o | | | | | | | o | |

| | | | | | | | | | | | | | | | | | | |
|---|---|---|---|---|---|---|---|---|---|---|---|---|---|---|---|---|---|---|
| o = open, otherwise closed | | | | | | | | | | | | | | | | | | |

Table 4 outlines valve sequence for the second preferred embodiment with product repressurization. Valve numbers refer to the drawing and the cycle is outlined in Table 2. Neither valve 19 or 20 are opened in this embodiment.

**TABLE 4 Valve Sequence: 3 Bed O₂ VSA**

| | | | * | | | * | | | * | * * | | | | | | * | | |
|---|---|---|---|---|---|---|---|---|---|---|---|---|---|---|---|---|---|---|
| Valve # --> | 1 | 2 | 3 | 4 | 5 | 6 | 7 | 8 | 9 | 10 | 11 | 12 | 13 | 14 | 15 | 16 | 17 | 18 |
| Time (sec) | | | | | | | | | | | | | | | | | | |
| 0- 5 | o | | | | o | | | | | | o o | | | | | | | o |
| 5-10 | o | | | | | | | | | | o | | | | o | | | o |
| 10-30 | o | | | | | | | o | | | o | o | | | o | | | |
| 30-35 | | | | o o | | | | | | | | o | | o | | | | o |
| 35-40 | | | | o | | | | | | | | o | | o | | | | o |
| 40-60 | | o | | o | | | | | | | | | | o | o | | | o |
| 60-65 | | o | | | | | o | | | | | o | | | o | | o | |
| 65-70 | | | | | | | o | | | | | o | | | o | | o | |
| 70-90 | | | | | o | | o | | | | | o | | | | | o | o |

| | | | | | | | | | | | | | | | | | | |
|---|---|---|---|---|---|---|---|---|---|---|---|---|---|---|---|---|---|---|
| o.= open; otherwise closed | | | | | | | | | | | | | | | | | | |
| * = These valves and corresponding headers are not used in this option. | | | | | | | | | | | | | | | | | | |

### EXAMPLE

Both preferred embodiments were tested in a process development unit (PDU) containing three 2.44m x10.2cm (8'x4")vessels. These vessels were packed with two types of adsorbents. Zeolite Na-X to remove water and carbon dioxide from ambient air was packed towards the feed end of these columns, and a N₂/O₂ selective Ca-A type zeolitic material was packed towards the product end of these vessels. Oxygen product purity of 93% was achieved.

Table 5 below compares the performance of the first preferred embodiment with a comparison process in which repressurization is carried out entirely by product oxygen. It is observed that the first preferred embodiment of the present invention requires less adsorbent per unit of oxygen product and results in higher oxygen recovery:

**TABLE 5**

| | Prior Art | Present Invention |
|---|---|---|
| | (U.K. Patent GB 2,109,266B) | (First Embodiment) |
| % O₂ Recovery | 53 | 63 |
| 1b Adsorbent/lbmole O₂ Product | 1 | 0.84 |

Table 6 below compares the performance of the second preferred embodiment with a comparative process in which pressure equalization is not carried out. It is observed that the second preferred embodiment of the present invention requires more adsorbent per unit of oxygen product, but results in higher oxygen recovery:

**TABLE 6**

| | Prior Art | Present Invention |
|---|---|---|
| | (U.K. Patent GB 2, 109, 2668) | (Second Embodiment) |
| % O₂ Recovery | 57 | 62. |
| 1b Adsorbent/1bmole O₂ Product | 1 | 1.06 |

It should be appreciated that exact operating conditions and adsorbents for the first and second preferred embodiment of the present are somewhat different.

It is also possible to perform the first (Table 7) and second (Table 8) embodiments in a 2-bed format with each bed experiencing the same series of cycle steps. The inter-relationship of the steps occurring in each bed does change, as set forth below, and cocurrent depressurization to pressure equalize while simultaneously countercurrently venting is still an option in the second embodiment.

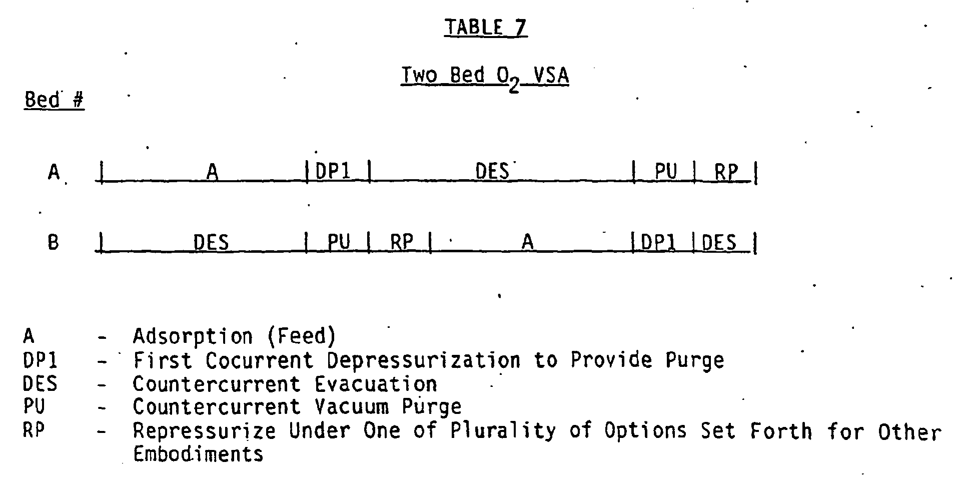

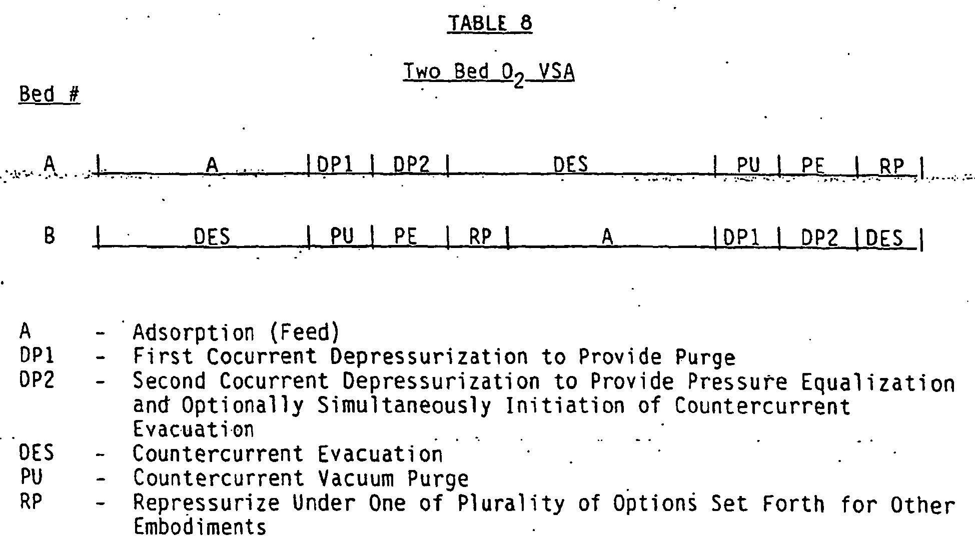

It is further possible to perform the first or second embodiment in a format having at least four beds wherein at least two beds are on feed or adsorption per recited step (a). An exemplary cycle is set forth in Table 9, below.

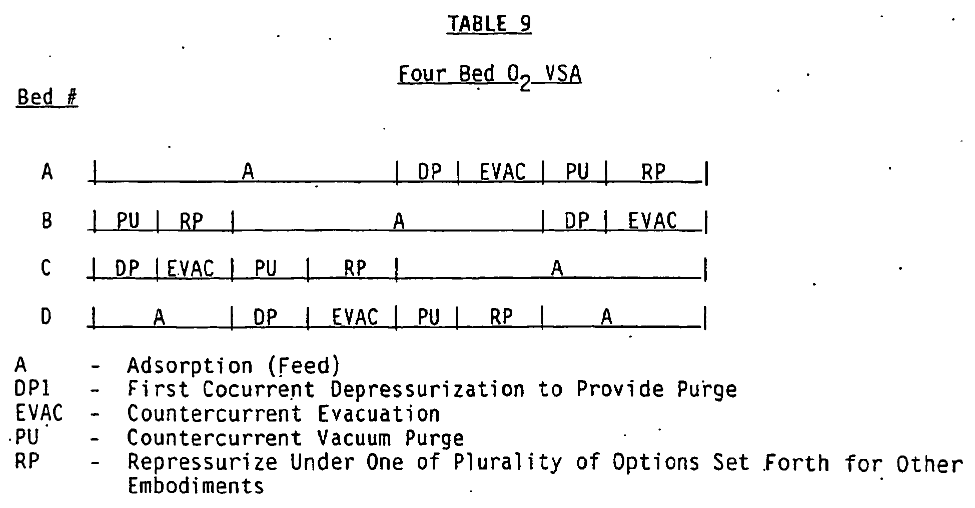

The embodiment with multiple beds on feed can be carried out with a pressure equalization step following the purge step wherein equalization gas is supplied from a bed then undergoing cocurrent depressurization. Cocurrent depressurization with simultaneous countercurrent evacuation is also possible. Using five or six beds, it is possible to have three beds simultaneously undergoing some portion of the step (a) feed or adsorption step.

Any adsorbent(s) which can selectively remove water, carbon dioxide, and nitrogen from air can be used. Examples of adsorbents capable of removing nitrogen from air include zeolitic molecular sieves such as NaX, NaA, CaX, CaA and other adsorbents with binary cations. Examples of adsorbents capable of removing water and carbon dioxide from air are aluminas, silica gels and zeolites. Other desired properties of the adsorbents are (i) high crush strength, (ii) high attrition resistance, (iii) large bulk density, (iv) low interpartical void, (v) high heat capacity, (vi) large thermal conductivity; (vii) high N₂/O₂ selectivity, (viii) low oxygen capacity and (ix) small particle size. Pressure drop through the adsorbent beds during adsorption and evacuation steps is also important for adsorbent selection.

Experiments with three bed 0₂ VSA cycles show that the order of magnitude of total product from a bed on adsorption step is about ten times the net oxygen product. The remainder of the total product gas not withdrawn as net product is required for product repressurization. Therefore, if one can reduce the quantity of product gas being used as the repressurization gas, the net product gas quantity will increase, improving the efficiency of the process.

One way the first embodiment achieves this is to use the feed gas for repressurization. However, total feed repressurization is not advisable since (1) it results in spreading of the N₂ front during the adsorption step and (2) water, carbon dioxide removal becomes less efficient. To eliminate these problems, partial feed and a partial product repressurization are employed. Another key of the present invention is realized by observing that the bed ready to be repressurized is at pressure lower than ambient; therefore, it can be repressurized by feed air by simply opening the inlet valve to atmosphere. This reduces blower power consumption otherwise used for feed repressurization. Repressurization only up to and adsorption at ambient pressure is not efficient for the operation of three bed O₂ VSA units. Therefore, ambient air repressurization is followed by feed air or product repressurization.

Another method to reduce the quantity, of product gas required for repressurization is by the appropriate use of pressure equalization steps (second embodiment). However, the prior art teaches that one should first depressurize the high pressure bed for pressure equalization and then depressurize it for providing the purge gas. Unexpectedly, it has been determined that for this cycle the reverse, i.e., first depressurization to provide purge followed by second depressurization to pressure equalize, is more efficient.

The present invention has been set forth with regard to several illustrative preferred embodiments, but the full scope of the present invention should be ascertained from the claims below.

## Claims

1. A vacuum swing adsorption process for selectively separating a more strongly adsorbable component from a less strongly adsorbable component of a feed gas mixture in a plurality of adsorption beds containing an adsorbent selective for the more strongly adsorbable component, comprising the steps of:
(a) introducing a feed gas mixture at high pressure containing said more strongly adsorbable component and said less strongly adsorbable component into an inlet of a first adsorption bed containing said adsorbent selective for the more strongly adsorbable component and adsorbing the more strongly adsorbable component on the adsorbent while the less strongly adsorbable component passes through said first bed unadsorbed until the adsorption front of the more strongly adsorbable component approaches an outlet of said first bed and terminating the introduction of the feed gas mixture;
(b) following the termination of the introduction of the feed gas mixture into said first bed and without any intervening steps, cocurrently depressurizing said first bed to a lower pressure to remove said gas mixture from said first bed and passing said gas mixture to an outlet of another bed of said plurality of adsorption beds at lower pressure to countercurrently purge said more strongly adsorbable component from said other bed;
(c) countercurrently evacuating said first bed under vacuum conditions to further remove said more strongly adsorbable component at the lowest pressure;
(d) countercurrently purging said first bed with cocurrently depressurizing gas mixture from another bed of said plurality of adsorption beds undergoing step (b) to remove additional more strongly adsorbable component from said first bed;
(e) repressurizing said first bed with less strongly adsorbable component from another bed of said plurality of adsorption beds currently undergoing step (a) and with ambiant pressure feed gas mixture; and
(f) performing steps (a) through (e) in each of said plurality of adsorption beds in a phased sequence.

2. The process of Claim 1 wherein said bed is repressurized initially with feed gas mixture and then with said less strongly adsorbable component.

3. The process of Claim 1 wherein said bed is repressurized with ambient pressure feed gas mixture and high pressure feed gas mixture.

4. The process of Claim 1 wherein said bed is repressurized initially with ambient pressure feed gas mixture and then with said less strongly adsorbable component.

5. The process of Claim 3 wherein said bed is repressurized initially with ambient pressure feed gas mixture, then with high pressure feed gas mixture and finally with said less strongly adsorbable component.

6. The process of Claim 1 wherein said bed is repressurized initially with said less strongly adsorbable component then with ambient pressure feed gas mixture.

7. The process of Claim 1 wherein said bed is repressurized initially with said less strongly adsorbable component then with ambient pressure feed gas mixture and then with high pressure feed gas mixture.

8. The process of Claim 1 wherein said bed is repressurized with said less strongly adsorbable component and ambient pressure feed gas mixture simultaneously.

9. The process of Claim 1 wherein said bed is repressurized with said less strongly adsorbable component and high pressure feed gas mixture simultaneously.

10. The process of Claim 1 wherein said feed gas mixture is air, said more strongly adsorbable component is nitrogen and said less strongly adsorbable component is oxygen.

11. The process of Claim 1 wherein a bed finishing cocurrent depressurization is then further cocurrent depressurized to pressure equalize with another bed of said plurality of adsorption beds finishing countercurrent purge.

12. The process of Claim 1 wherein the process is carried out in two beds.

13. The process of Claim 1 wherein the process is carried out in at least four beds and at least two beds are simultaneously in a portion of step (a).

14. A process according to claim 1, the process further comprising the following additional steps:
between steps (b) and (c), step
(b1) cocurrently depressurizing said first bed to further remove
said gas mixture from said first bed and to pressure equalize said first bed with another bed of said plurality of adsorption beds finishing countercurrent purge of step (d); and
between stps (d) and (e), step
(d1) countercurrently pressure equalizing said first bed with another bed of said plurality of adsorption beds at higher pressure undergoing said cocurrent depressuriztaion of step (c1).

15. The process of Claim 14 wherein said bed is repressurized with ambient pressure feed gas mixture and high pressure feed gas mixture.

16. The process of Claim 14 wherein said bed is repressurized initially with ambient pressure feed gas mixture and then with said less strongly adsorbable component.

17. The process of Claim 14 wherein said first bed is repressurized initially with ambient pressure feed gas mixture, then with high pressure feed gas mixture and finally with said less strongly adsorbable component.

18. The process of Claim 14 wherein said bed is repressurized initially with said less strongly adsorbable component then with ambient pressure feed gas mixture.

19. The process of Claim 14 wherein said bed is repressurized initially with said less strongly adsorbable component then with ambient pressure feed gas mixture and then with high pressure feed gas mixture.

20. The process of Claim 14 wherein said first bed is repressurized with said less strongly adsorbable component and said feed gas mixture simultaneously.

21. The process of Claim 14 wherein said feed gas mixture is air, said more strongly adsorbable component is nitrogen and said less strongly adsorbable component is oxygen.

22. The process of Claim 14 wherein during step (c) cocurrent depressurization to pressure equalize with another bed, simultaneously initiating countercurrent evacuation of said first bed.

23. The process of Claim 14 wherein the process is carried out in two beds.

24. The process of Claim 14 wherein the process is carried out in at least four beds and at least two beds are simultaneously in a portion of step (a).

25. A process according to claim 14, wherein
- the plurality of adsorption beds consists of three adsorption beds;
- the feed gas mixture is air,
- the more strongly adsorbable component is nitrogen,
- the less strongly adsorbable component is oxygen,
- the gas mixture removed from the first bed in steps (b) and (c) is void space gas and nitrogen; and wherein
- void space gas and nitrogen are removed in step (b1).

26. The process of Claim 25 wherein said bed is repressurized initially with feed air and then with said less strongly adsorbable component.

27. The process of Claim 25 wherein said bed is repressurized initially with ambient pressure feed gas mixture and then with said less strongly adsorbable component.

28. The process of Claim 25 wherein said bed is repressurized initially with ambient pressure feed air, then with high pressure feed air and finally with oxygen.

29. The process of Claim 25 wherein said bed is repressurized initially with oxygen and then with ambient pressure feed air.

30. The process of Claim 25 wherein said bed is repressurized initially with oxygen then with ambient pressure feed air and then with high pressure feed air.

31. The process of Claim 25 wherein said bed is repressurized with oxygen and said feed air simultaneously.

32. The process of claim 25 wherein said feed air is at a pressure in the range of approximately 14-30 psia.

33. The process of Claim 25 wherein said feed air is at a pressure in the range of approximately 0.97-1.65 bar (14-24 psia).

34. The process of Claim 25 wherein at the end of said evacuation said bed is at a pressure in the range of approximately 0.07-0.7 bar (1-10 psia).

35. The process of Claim 25 wherein said bed is repressurized with oxygen and ambient pressure feed air simultaneously.

36. The process of Claim 25 wherein said bed is repressurized with oxygen and high pressure feed air simultaneously.

37. The process of Claim 25 wherein during step (c) cocurrent depressurization to pressure equalize with another bed, simultaneously initiating countercurrent evacuation of said first bed.

38. The process of Claim 25 wherein the process is carried out in two beds.

39. The process of Claim 25 wherein the process is carried out in at least four beds and at least two beds are simultaneously in a portion of step (a).

## Patentansprüche

1. Unterdruck-Wechseladsorptionsverfahren zum selektiven Abtrennen einer stärker adsorbierbaren Komponente von einer weniger stark adsorbierbaren Komponente einer Speisegasmischung in einer Vielzahl von Adsorptionsbetten, die ein Adsorptionsmittel enthalten, das für die stärker adsorbierbare Komponente selektiv ist, mit den folgenden Schritten:
(a) Einbringen eines Speisegasgemisches, das die stärker adsorbierbare Komponente und die weniger stark adsorbierbare Komponente enthält, bei hohem Druck in einen Einlass eines ersten Adsorptionsbettes, welches das Adsorptionsmittel enthält, das für die stärker adsorbierbare Komponente selektiv ist, und Adsorbieren der stärker adsorbierbaren Komponente auf dem Adsorptionsmittel, während die weniger stark adsorbierbare Komponente durch das erste Bett unadsorbiert hindurchgeht, bis die Adsorptionsfront der stärker adsorbierbaren Komponente den Auslass des ersten Bettes erreicht, und Beenden der Einbringung des Speisegasgemisches;
(b) in Abfolge auf das Beenden der Einbringung des Speisegasgemisches in das erste Bett und ohne jedwede Zwischenschritte, eine Gleichstrom-Druckentlastung des ersten Bettes auf einen niedrigeren Druck, um das Gasgemisch aus dem ersten Bett zu entfernen, und Führen des Gasgemisches zu einem Auslass eines anderen Bettes aus der Vielzahl der Adsorptionsbetten bei niedrigerem Druck, um die stärker adsorbierbare Komponente aus dem ersten Bett im Gegenstrom auszureinigen;
(c) Gegenstrom-Evakuierung des ersten Bettes unter Unterdruckbedingungen, um die stärker adsorbierbare Komponente beim niedrigsten Druck weiter zu entfernen;
(d) Gegenstrom-Reinigung des ersten Bettes mit Gleichstrom-Druckentlastungs-Gasgemisch aus einem anderen Bett aus der Vielzahl der Adsorptionsbetten, das den Schritt (b) durchführt, um zusätzlich stärker adsorbierbare Komponente aus dem ersten Bett zu entfernen;
(e) Wiederbedrucken des ersten Bettes mit weniger stark adsorbierbarer Komponente aus einem anderen Bett aus der Vielzahl von Adsorptionsbetten, das zu dem Zeitpunkt den Schritt (a) durchführt, und mit Umgebungsdruck-Speisegasgemisch; und
(f) Durchführen der Schritte (a) bis (e) in jedem aus der Vielzahl der Adsorptionsbetten in einer Phasensequenz.

2. Verfahren nach Anspruch 1, bei dem das Bett anfangs mit Speisegasgemisch und dann mit weniger stark adsorbierbarer Komponente wiederbedruckt wird.

3. Verfahren nach Anspruch 1, bei dem das Bett mit Umgebungsdruck-Speisegasgemisch und Hochdruck-Speisegasgemisch wiederbedruckt wird.

4. Verfahren nach Anspruch 1, bei dem das Bett anfangs mit Umgebungsdruck-Speisegasgemisch und dann mit der weniger stark adsorbierbaren Komponente wiederbedruckt wird.

5. Verfahren nach Anspruch 3, bei dem das Bett anfangs mit Umgebungsdruck-Speisegasgemisch, dann mit Hochdruck-Speisegasgemisch und schließlich mit der weniger stark adsorbierbaren Komponente wiederbedruckt wird.

6. Verfahren nach Anspruch 1, bei dem das Bett anfangs mit der weniger stark adsorbierbaren Komponente, dann mit Umgebungsdruck-Speisegasgemisch wiederbedruckt wird.

7. Verfahren nach Anspruch 1, bei dem das Bett anfangs mit der weniger stark adsorbierbaren Komponente, dann mit Umgebungsdruck-Speisegasgemisch und dann mit Hochdruck-Speisegasgemisch wiederbedruckt wird.

8. Verfahren nach Anspruch 1, bei dem das Bett gleichzeitig mit der weniger stark adsorbierbaren Komponente und Umgebungsdruck-Speisegasgemisch wiederbedruckt wird.

9. Verfahren nach Anspruch 1, bei dem das Bett gleichzeitig mit der weniger stark adsorbierbaren Komponente und Hochdruck-Speisegasgemisch wiederbedruckt wird.

10. Verfahren nach Anspruch 1, bei dem das Speisegasgemisch Luft ist, die stärker adsorbierbare Komponente Stickstoff ist und die weniger stark adsorbierbare Komponente Sauerstoff ist.

11. Verfahren nach Anspruch 1, bei dem das Bett, das die Gleichstrom-Druckentlastung beendet, dann weiter im Gleichstrom druckentlastet wird, um sich um Druck mit einem anderen Bett aus der Vielzahl der Adsorptionsbetten anzugleichen, welche die Gegenstrom-Reinigung beendet.

12. Verfahren nach Anspruch 1, bei dem das Verfahren mit zwei Betten durchgeführt wird.

13. Verfahren nach Anspruch 1, bei dem das Verfahren mit mindestens 4 Betten durchgeführt wird und sich mindestens zwei Betten gleichzeitig in einem Abschnitt des Schrittes (a) befinden.

14. Verfahren nach Anspruch 1, wobei das Verfahren ferner die folgenden zusätzlichen Schritte umfasst:
zwischen den Schritten (b) und (c), dem Schritt
(b1) Gleichstrom-Druckentlastung des ersten Bettes, um weiter das Gasgemisch aus dem ersten Bett zu entfernen und das erste Bett mit einem anderen Bett aus der Vielzahl der Adsorptionsbetten im Druck anzugleichen, welches die Gegenstrom-Reinigung des Schrittes (d) beendet; und
zwischen den Schritten (d) und (e), Schritt
(d1) Gegenstrom-Druckausgleich zwischen dem ersten Bett und einem anderen Bett aus der Vielzahl der Adsorptionsbetten bei einem höheren Druck, welches die Gleichstrom-Druckentlastung des Schrittes (c1) durchführt.

15. Verfahren nach Anspruch 14, bei dem das Bett mit Umgebungsdruck-Speisegasgemisch und Hochdruck-Speisegasgemisch wiederbedruckt wird.

16. Verfahren nach Anspruch 14, bei dem das Bett anfangs mit Umgebungsdruck-Speisegasgemisch und dann mit der weniger stark adsorbierbaren Komponente wiederbedruckt wird.

17. Verfahren nach Anspruch 14, bei dem das erste Bett anfangs mit Umgebungsdruck-Speisegasgemisch, dann mit Hochdruck-Speisegasgemisch und schließlich mit der weniger stark adsorbierbaren Komponente wiederbedruckt wird.

18. Verfahren nach Anspruch 14, bei dem das Bett anfangs mit der weniger stark adsorbierbaren Komponente, dann mit Umgebungsdruck-Speisegasgemisch wiederbedruckt wird.

19. Verfahren nach Anspruch 14, bei dem das Bett anfangs mit der weniger stark adsorbierbaren Komponente, dann mit Umgebungsdruck-Speisegasgemisch und dann mit Hochdruck-Speisegasgemisch wiederbedruckt wird.

20. Verfahren nach Anspruch 14, bei dem das erste Bett gleichzeitig mit der weniger stark adsorbierbaren Komponente und dem Speisegasgemisch wiederbedruckt wird.

21. Verfahren nach Anspruch 14, bei dem das Speisegasgemisch Luft ist, die stärker adsorbierbare Komponente Stickstoff ist und die weniger stark adsorbierbare Komponente Sauerstoff ist.

22. Verfahren nach Anspruch 14, bei dem während der Gleichstrom-Druckentlastung des Schrittes (c), zum Druckausgleich mit einem anderen Bett, gleichzeitig eine Gegenstrom-Evakuierung des ersten Betts begonnen wird.

23. Verfahren nach Anspruch 14, bei dem das Verfahren mit zwei Betten durchgeführt wird.

24. Verfahren nach Anspruch 14, bei dem das Verfahren mit mindestens 4 Betten durchgeführt wird und sich mindestens zwei Betten gleichzeitig in einem Abschnitt des Schrittes (a) befinden.

25. Verfahren nach Anspruch 14, bei dem
- die Vielzahl der Adsorptionsbetten aus drei Adsorptionsbetten besteht;
- das Speisegasgemisch Luft ist,
- die stärker adsorbierbare Komponente Stickstoff ist,
- die weniger stark adsorbierbare Komponente Sauerstoff ist,
- das Gasgemisch, das aus dem ersten Bett in den Schritten (b) und (c) entfernt wird, Hohlraumgas und Stickstoff ist; und bei dem
- Hohlraumgas und Stickstoff im Schritt (b1) entfernt werden.

26. Verfahren nach Anspruch 25, bei dem das Bett anfangs mit Speiseluft und dann mit der weniger stark adsorbierbaren Komponente wiederbedruckt wird.

27. Verfahren nach Anspruch 25, bei dem das Bett anfangs mit Umgebungsdruck-Speisegasgemisch und dann mit der weniger stark adsorbierbaren Komponente wiederbedruckt wird.

28. Verfahren nach Anspruch 25, bei dem das Bett anfangs mit Umgebungsdruck-Speiseluft, dann mit Hochdruck-Speiseluft und schließlich mit Sauerstoff wiederbedruckt wird.

29. Verfahren nach Anspruch 25, bei dem das Bett anfangs mit Sauerstoff und dann mit Umgebungsdruck-Speiseluft wiederbedruckt wird.

30. Verfahren nach Anspruch 25, bei dem das Bett anfangs mit Sauerstoff, dann mit Umgebungsdruck-Speiseluft und dann mit Hochdruck-Speiseluft wiederbedruckt wird.

31. Verfahren nach Anspruch 25, bei dem das Bett mit Sauerstoff und der Speiseluft gleichzeitig wiederbedruckt wird.

32. Verfahren nach Anspruch 25, bei dem die Speiseluft auf einem Druck im Bereich von ungefähr 14 - 30 psia liegt.

33. Verfahren nach Anspruch 25, bei dem die Speiseluft bei einem Druck im Bereich von ungefähr 0,97 bis 1,65 bar (14 - 24 psia) liegt.

34. Verfahren nach Anspruch 25, bei dem am Ende der Evakuierung das Bett bei einem Druck im Bereich von ungefähr 0,07 - 0,7 bar (1 - 10 psia) liegt.

35. Verfahren nach Anspruch 25, bei dem das Bett gleichzeitig mit Sauerstoff und Umgebungsdruck-Speiseluft wiederbedruckt wird.

36. Verfahren nach Anspruch 25, bei dem das Bett mit Sauerstoff und Hochdruck-Speiseluft gleichzeitig wiederbedruckt wird.

37. Verfahren nach Anspruch 25, bei dem während der Gleichstrom-Druckentlastung des Schrittes (c), zum Druckausgleich mit einem anderen Bett, gleichzeitig eine Gegenstrom-Evakuierung des ersten Bettes begonnen wird.

38. Verfahren nach Anspruch 25, bei dem das Verfahren mit zwei Betten durchgeführt wird.

39. Verfahren nach Anspruch 25, bei dem das Verfahren mit mindestens 4 Betten durchgeführt wird und mindestens zwei Betten sich gleichzeitig in einem Abschnitt des Schrittes (a) befinden.

## Revendications

1. Procédé d'adsorption par variation de dépression (VSA : Vacuum Swing Adsorption) servant à séparer sélectivement un composant plus fortement adsorbable d'un composant moins fortement adsorbable d'un mélange gazeux d'alimentation dans une pluralité de lits d'adsorption contenant un adsorbant sélectif du composant plus fortement adsorbable, comprenant les étapes suivantes :
(a) introduction d'un mélange gazeux d'alimentation sous haute pression contenant ledit composant plus fortement adsorbable et ledit composant moins fortement adsorbable dans une entrée d'un premier lit d'adsorption contenant ledit adsorbant sélectif du composant plus fortement adsorbable et adsorption du composant plus fortement adsorbable sur l'adsorbant tandis que le composant moins fortement adsorbable passe à travers ledit premier lit sans être adsorbé jusqu'à ce que le front d'adsorption du composant plus fortement adsorbable se rapproche d'une sortie dudit premier lit et arrêt de l'introduction du mélange gazeux d'alimentation ;
(b) à la suite de l'arrêt de l'introduction du mélange gazeux d'alimentation dans ledit premier lit et sans aucune étape interposée, dépressurisation dans le sens du courant dudit premier lit jusqu'à une pression inférieure pour éliminer ledit mélange gazeux dudit premier lit et transférer ledit mélange gazeux vers une sortie d'un autre lit de ladite pluralité de lits d'adsorption sous une pression inférieure afin de purger à contre-courant ledit composant plus fortement adsorbable dudit autre lit ;
(c) évacuation à contre-courant dudit premier lit dans des conditions de vide afin d'éliminer davantage ledit composant plus fortement adsorbable sous la plus basse pression ;
(d) purge à contre-courant dudit premier lit avec dépressurisation dans le sens du courant du mélange gazeux provenant d'un autre lit de ladite pluralité de lits d'adsorption subissant l'étape (b) pour éliminer davantage du composant plus fortement adsorbable dudit premier lit ;
(e) repressurisation dudit premier lit au moyen du composant moins fortement adsorbable provenant d'un autre lit de ladite pluralité de lits d'adsorption subissant au moment considéré l'étape (a) et au moyen d'un mélange gazeux d'alimentation sous la pression ambiante ; et
(f) exécution des étapes (a) à (e) dans chacun de ladite pluralité de lits d'adsorption en une séquence échelonnée.

2. Procédé selon la revendication 1 dans lequel ledit lit est repressurisé initialement au moyen du mélange gazeux d'alimentation et ensuite au moyen dudit composant moins fortement adsorbable.

3. Procédé selon la revendication 1 dans lequel ledit lit est repressurisé au moyen du mélange gazeux d'alimentation sous la pression ambiante et du mélange gazeux d'alimentation sous haute pression.

4. Procédé selon la revendication 1 dans lequel ledit lit est repressurisé initialement au moyen du mélange gazeux d'alimentation sous la pression ambiante et ensuite au moyen dudit composant moins fortement adsorbable.

5. Procédé selon la revendication 3 dans lequel ledit lit est repressurisé initialement au moyen du mélange gazeux d'alimentation sous la pression ambiante, ensuite au moyen du mélange gazeux d'alimentation sous haute pression et finalement au moyen dudit composant moins fortement adsorbable.

6. Procédé selon la revendication 1 dans lequel ledit lit est repressurisé initialement au moyen dudit composant moins fortement adsorbable, puis au moyen du mélange gazeux d'alimentation sous la pression ambiante.

7. Procédé selon la revendication 1 dans lequel ledit lit est repressurisé initialement au moyen dudit composant moins fortement adsorbable, puis au moyen du mélange gazeux d'alimentation sous la pression ambiante et ensuite au moyen du mélange gazeux d'alimentation sous haute pression.

8. Procédé selon la revendication 1 dans lequel ledit lit est repressurisé au moyen dudit composant moins fortement adsorbable et du mélange gazeux d'alimentation sous la pression ambiante simultanément.

9. Procédé selon la revendication 1 dans lequel ledit lit est repressurisé au moyen dudit composant moins fortement adsorbable et du mélange gazeux d'alimentation sous haute pression simultanément.

10. Procédé selon la revendication 1 dans lequel ledit mélange gazeux d'alimentation est de l'air, ledit composant plus fortement adsorbable est de l'azote et ledit composant moins fortement adsorbable est de l'oxygène.

11. Procédé selon la revendication 1 dans lequel un lit fmissant une dépressurisation dans le sens du courant est ensuite davantage dépressurisé dans le sens du courant pour égaliser la pression avec un autre lit de ladite pluralité de lits d'adsorption finissant une purge à contre-courant.

12. Procédé selon la revendication 1 dans lequel le procédé est réalisé dans deux lits.

13. Procédé selon la revendication 1 dans lequel le procédé est réalisé dans au moins quatre lits et au moins deux lits sont simultanément dans une partie de l'étape (a).

14. Procédé selon la revendication 1, le procédé comprenant en outre les étapes supplémentaires suivantes :
entre les étapes (b) et (c), l'étape
(b1) dépressurisation dans le sens du courant dudit premier lit pour éliminer davantage ledit mélange gazeux dudit premier lit et pour égaliser la pression dudit premier lit avec un autre lit de ladite pluralité de lits d'adsorption finissant la purge à contre-courant de l'étape (d) ; et
entre les étapes (d) et (e), l'étape
(d1) égalisation de pression à contre-courant dudit premier lit avec un autre lit de ladite pluralité de lits d'adsorption à une pression supérieure subissant ladite dépressurisation dans le sens du courant de l'étape (c1).

15. Procédé selon la revendication 14 dans lequel ledit lit est repressurisé au moyen du mélange gazeux d'alimentation sous la pression ambiante et du mélange gazeux d'alimentation sous haute pression.

16. Procédé selon la revendication 14 dans lequel ledit lit est repressurisé initialement au moyen du mélange gazeux d'alimentation sous la pression ambiante et ensuite au moyen dudit composant moins fortement adsorbable.

17. Procédé selon la revendication 14 dans lequel ledit premier lit est repressurisé initialement au moyen du mélange gazeux d'alimentation sous la pression ambiante, ensuite au moyen du mélange gazeux d'alimentation sous haute pression et finalement au moyen dudit composant moins fortement adsorbable.

18. Procédé selon la revendication 14 dans lequel ledit lit est repressurisé initialement au moyen dudit composant moins fortement adsorbable, puis au moyen du mélange gazeux d'alimentation sous la pression ambiante.

19. Procédé selon la revendication 14 dans lequel ledit lit est repressurisé initialement au moyen dudit composant moins fortement adsorbable, puis au moyen du mélange gazeux d'alimentation sous la pression ambiante et ensuite au moyen du mélange gazeux d'alimentation sous haute pression.

20. Procédé selon la revendication 14 dans lequel ledit premier lit est repressurisé au moyen dudit composant moins fortement adsorbable et dudit mélange gazeux d'alimentation simultanément.

21. Procédé selon la revendication 14 dans lequel ledit mélange gazeux d'alimentation est de l'air, ledit composant plus fortement adsorbable est de l'azote et ledit composant moins fortement adsorbable est de l'oxygène.

22. Procédé selon la revendication 14 dans lequel, pendant l'étape (c) une dépressurisation dans le sens du courant pour égaliser la pression avec un autre lit, déclenchant simultanément une évacuation à contre-courant dudit premier lit.

23. Procédé selon la revendication 14 dans lequel le procédé est réalisé dans deux lits.

24. Procédé selon la revendication 4 dans lequel le procédé est réalisé dans au moins quatre lits et au moins deux lits sont simultanément dans une partie de l'étape (a).

25. Procédé selon la revendication 14, dans lequel
- la pluralité de lits d'adsorption consiste en trois lits d'adsorption ;
- le mélange gazeux d'alimentation est de l'air,
- le composant plus fortement adsorbable est de l'azote,
- le composant moins fortement adsorbable est de l'oxygène,
- le mélange gazeux éliminé du premier lit dans les étapes (b) et (c) est du gaz d'espace vide et de l'azote ; et dans lequel
- le gaz d'espace vide et l'azote sont éliminés dans l'étape (b1).

26. Procédé selon la revendication 25 dans lequel ledit lit est repressurisé initialement au moyen d'air d'alimentation et ensuite au moyen dudit composant moins fortement adsorbable.

27. Procédé selon la revendication 25 dans lequel ledit lit est repressurisé initialement au moyen du mélange gazeux d'alimentation sous la pression ambiante et ensuite au moyen dudit composant moins fortement adsorbable.

28. Procédé selon la revendication 25 dans lequel ledit lit est repressurisé initialement au moyen d'air d'alimentation sous la pression ambiante, ensuite au moyen d'air d'alimentation sous haute pression et finalement au moyen d'oxygène.

29. Procédé selon la revendication 25 dans lequel ledit lit est repressurisé initialement au moyen d'oxygène et ensuite au moyen d'air d'alimentation sous la pression ambiante.

30. Procédé selon la revendication 25 dans lequel ledit lit est repressurisé initialement au moyen d'oxygène, puis au moyen d'air d'alimentation sous la pression ambiante et ensuite au moyen d'air d'alimentation sous haute pression.

31. Procédé selon la revendication 25 dans lequel ledit lit est repressurisé au moyen d'oxygène et dudit air d'alimentation simultanément.

32. Procédé selon la revendication 25 dans lequel ledit air d'alimentation est sous une pression de la plage d'environ 14 à 30 psia.

33. Procédé selon la revendication 25 dans lequel ledit air d'alimentation est sous une pression de la plage d'environ 0,97 à 1,65 bars (14 à 24 psia).

34. Procédé selon la revendication 25 dans lequel, à la fin de ladite évacuation, ledit lit est sous une pression de la plage d'environ 0,07 à 0,7 bar (1 à 10 psia).

35. Procédé selon la revendication 25 dans lequel ledit lit est repressurisé au moyen d'oxygène et d'air d'alimentation sous la pression ambiante simultanément.

36. Procédé selon la revendication 25 dans lequel ledit lit est repressurisé au moyen d'oxygène et d'air d'alimentation sous haute pression simultanément.

37. Procédé selon la revendication 25 dans lequel, pendant l'étape (c) une dépressurisation dans le sens du courant pour égaliser la pression avec un autre lit, déclenchant simultanément une évacuation à contre-courant dudit premier lit.

38. Procédé selon la revendication 25 dans lequel le procédé est réalisé dans deux lits.

39. Procédé selon la revendication 25 dans lequel le procédé est réalisé dans au moins quatre lits et au moins deux lits sont simultanément dans une partie de l'étape (a).
